# EUROPÄISCHE PATENTSCHRIFT

(11) **EP 1 463 647 B1**
(45) Veröffentlichungstag und Bekanntmachung des Hinweises auf die Patenterteilung: **03.08.2005**
(21) Anmeldenummer: 03724944.8
(22) Anmeldetag: 02.04.2003
(51) Int. Cl.: B60J 7/14

(54) **HARDTOP-FAHRZEUGDACH MIT DREI STARREN DACHTEILEN**
HARDTOP VEHICLE ROOF WITH THREE RIGID ROOF PIECES
TOIT AMOVIBLE DE VEHICULE COMPRENANT TROIS PARTIES DE TOIT RIGIDES

(30) Priorität: 09.04.2002 DE 10215663; 16.09.2002 DE 10243070; 11.12.2002 DE 10258054
(43) Veröffentlichungstag der Anmeldung: 06.10.2004
(73) Patentinhaber: CTS Fahrzeug-Dachsysteme GmbH, 74321 Bietigheim-Bissingen (DE)
(72) Erfinder: BRUDER, Gernot, 76131 Karlsruhe (DE); PAPENDORF, Marcus, 74354 Besigheim (DE); NETZEL, Peter, 20537 Hamburg (DE); SCHUMACHER, Thorsten, 25495 Kummerfeld (DE); HALBWEISS, Thomas, 71686 Remseck (DE)
(74) Vertreter: Wittner, Walter
(86) Internationale Anmeldenummer: PCT/EP2003/003440
(87) Internationale Veröffentlichungsnummer: WO 2003/084773

(56) Entgegenhaltungen:
- EP-A- 1 302 351
- DE-A- 10 042 460
- DE-A- 10 108 493
- DE-A- 19 642 152
- DE-C- 10 006 296

## Beschreibung

Die Erfindung betrifft ein Hardtop-Fahrzeugdach mit drei starren Dachteilen gemäß dem Oberbegriff des Anspruches 1.

Bei einem derartigen, aus der gattungsgemäßen DE 196 42 152 A1 bekannten Fahrzeugdach liegen in der Schließposition des Daches die Dachteile aneinander anschließend unmittelbar hintereinander und sind in der Ablageposition zu einem übereinander liegenden Dachteilpaket gestapelt, das in einem heckseitigen Ablageraum verstaut wird. Das hintere Dachteil ist schwenkbar mit der Karosserie verbunden, das vordere und das mittlere Dachteil sind über Verstellkinematiken jeweils an dem nächstfolgenden Dachteil angelenkt. Im Dachteilpaket liegt das mittlere Dachteil unterhalb des hinteren Dachteiles und das vordere Dachteil unter dem mittleren Dachteil, so dass das vordere Dachteil zuunterst, und das mittlere Dachteil in der Mitte und das hintere Dachteil zuoberst liegt.

Zur Überführung des Fahrzeugdaches in die Ablageposition wird das Fahrzeugdach insgesamt, unter Beibehalt einer der Schließposition des Daches entsprechenden Lage der Dachteile zueinander, nach oben aufgeschwenkt und erst danach das Dachteilpaket aufgebaut, indem vorderes und mittleres Dachteil gleichzeitig gegeneinander und unter das hintere Dachteil eingeschwenkt werden, und zwar unter Beibehalt der gleichsinnigen Ausrichtung. Für die Verstellung der Dachteile gegeneinander und die Verstellung des Daches in seine Ablageposition ist ein gemeinsamer Antrieb vorgesehen, bei dem der Antrieb für die die Dachteile untereinander verbindenden Verstellkinematiken von der Verstellkinematik für das hintere Dachteil, über die das gesamte Dach getragen ist, abgezweigt wird. Trotz hohem kinematischen und steuerungstechnischen Aufwand sind dadurch die Möglichkeiten, die Verstellbewegungen zu beeinflussen, eingeschränkt, wobei zudem an die Stabilität der Verstellkinematiken und den Antrieb hohe Anforderungen gestellt sind, da das Dach bei voller Ausladung geöffnet werden muss, bevor die Paketbildung einsetzt.

Bekannt sind ferner aus der DE 100 06 296 C1 dreiteilige Hardtop-Fahrzeugdächer, von deren in der Schließposition aneinander anschließenden, den Fahrzeuginnenraum überdeckenden Dachteilen das mittlere Dachteil über eine als Viergelenkkinematik ausgebildete Verstellkinematik gegen die Karosserie abgestützt ist und bei denen das vordere und das hintere Dachteil vom mittleren Dachteil getragen und am mittleren Dachteil ihrerseits über als Viergelenkkinematiken ausgestaltete Verstellkinematiken angebunden sind. Die Viergelenkkinematiken weisen jeweils einen Antriebslenker auf, und es sind diese Antriebslenker untereinander verbunden, so dass abgeleitet von der Viergelenkkinematik, über die das mittlere Dachteil gegen die Karosserie abgestützt ist, bei Verstellung des mittleren Dachteiles vorderes und hinteres Dachteil gegenüber dem mittleren Dachteil verstellt werden, und zwar derart, dass die Dachteile in ihrer der Ablageposition entsprechenden Paketlage gleichsinnig gestapelt mit nach oben weisender Dachaußenseite übereinander liegen und das mittlere Dachteil eine Zwischenstellung zwischen vorderem und hinterem Dachteil einnimmt.

Bei einem weiteren, aus der DE 100 42 460 A1 bekannten Hardtop-Fahrzeugdach mit ebenfalls drei starren Dachteilen ist wiederum das mittlere Dachteil über eine als Viergelenkkinematik ausgebildete Verstellkinematik gegen die Karosserie abgestützt und trägt seinerseits über eine weitere Viergelenkkinematik das vordere Dachteil. Das hintere Dachteil ist mit dem hinteren Lenker der das mittlere Dachteil tragenden Viergelenkkinematik lagefest verbunden, so dass sich in der nach hinten verschwenkten Ablageposition des Hardtop-Fahrzeugdaches ein Dachteilpaket ergibt, bei dem das vordere Dachteil über dem mittleren Dachteil bei gleichsinniger Ausrichtung mit nach oben weisender Dachaußenfläche liegt, während das hintere Dachteil bei gegensinniger Bombierung unter dem mittleren Dachteil liegt.

Eine diesem Aufbau eines Hardtop-Fahrzeugdaches im Prinzip entsprechende Ausgestaltung ist bei der DE 101 08 493 A1 gegeben, wobei in der Antriebsverbindung zwischen der das vordere Dachteil und der das mittlere Dachteil tragenden Viergelenkkinematik ein Antriebsvorgelege vorgesehen ist, das seinerseits als Vierlenkergetriebe ausgebildet ist.

Mit der nicht vorveröffentlichten EP 1 302 351 A2 wird ein Hardtop-Fahrzeugdach vorgeschlagen, das drei starre Dachteile aufweist, die in der Ablageposition ein Dachteilpaket bilden, in dem bei gleichsinniger Stapelung der Dachteile mit nach oben weisender Dachaußenseite vorderes und hinteres Dachteil über dem mittleren Dachteil liegen. Das mittlere Dachteil ist über eine Viergelenkkinematik gegen die Karosserie abgestützt und trägt seinerseits über Viergelenkkinematiken vorderes und hinteres Dachteil, wobei in der Antriebsverbindung zu den Viergelenkkinematiken von vorderem und hinterem Dachteil jeweils Antriebsvorgelege vorgesehen sind, und zwar in der Grundform von Vier- bzw. Fünflenkergetrieben.

Der Erfindung liegt die Aufgabe zugrunde, ein Hardtop-Fahrzeug der eingangs genannten Art dahingehend auszugestalten, dass sich erweiterte Verstellmöglichkeiten bei geringerer Beanspruchung der Gesamtkinematik und ohne Beeinträchtigung der Größe des Fahrzeuginnenraumes beim Öffnen und Schließen des Fahrzeugdaches ergeben.

Erreicht wird dies erfindungsgemäß mit den Merkmalen des Anspruches 1, zu dem die Unteransprüche zweckmäßige Weiterbildungen aufzeigen.

Dadurch, dass bei der erfindungsgemäßen Lösung eine Schichtung des Dachteilpaketes mit Ablage von vorderem und hinterem Dachteil oberhalb des mittleren Dachteiles vorgenommen wird, kann das mittlere Dachteil während der Bildung des Dachteilpaketes seine Lage beibehalten, und es werden dadurch Beeinträchtigungen des Fahrzeuginnenraumes durch die Paketbildung vermieden. Zugleich wird der zentrale Bereich des Fahrzeuginnenraumes spät freigegeben und frühzeitig abgedeckt, bleibt also länger geschützt. Zudem wird das Paket als Ganzes verstellt, und es braucht bei der Verstellgeschwindigkeit für das Dachteilpaket nicht auf die Verstellung bzw. die Verstellgeschwindigkeit für das vordere und das hintere Dachteil Rücksicht genommen werden, die am mittleren, mit der Karosserie unmittelbar verbundenen Dachteil angelenkt sind. Die Zuordnung des Antriebes für das vordere und das hintere Dachteil zum mittleren Dachteil gibt des Weiteren auch in vorteilhafter Weise die Möglichkeit, diese Dachteile gleichzeitig und unter Ausgleich ihrer Stützmomente gegenüber dem mittleren Dachteil zu verschwenken, so dass für die das mittlere Dachteil gegen die Karosserie abstützende und über das mittlere Dachteil das Gesamtdach tragende Verstellkinematik günstige Belastungsverhältnisse gegeben sind, auch unter dem Gesichtspunkt von bei der Verstellung des Fahrzeugdaches an diesem angreifenden Windkräften.

Die Zuordnung des Antriebs für vorderes und hinteres Dachteil zum mittleren Dachteil macht es in einfacher Weise möglich, mit einem gemeinsamen Antrieb zu arbeiten und diesen in einfacher Weise und raumsparend auszubilden, wobei die Verwendung von Antriebsvorgelegen in der Verbindung zwischen dem mittleren Dachteil und den von diesem getragenen vorderen und hinteren Dachteilen zusätzliche Möglichkeiten bietet, eine enge Paketschichtung bei geringem Raumbedarf und bei erweiterten Einflussmöglichkeiten auf die Verstellbewegung von vorderem und hinterem Dachteil gegenüber dem mittleren Dachteil zu erreichen.

Als besonders zweckmäßig erweist es sich hierbei, mit unterschiedlichen Antriebsvorgelegen für vorderes und hinteres Dachteil zu arbeiten, über die sich in günstiger Weise ein Abgleich der Bewegungsabläufe erreichen lässt. Erfindungsgemäß hat es sich hierfür als zweckmäßig erwiesen, einerseits mit einer Viergelenkkinematik und andererseits mit einem Fünflenkergetriebe als Antriebsvorgelege zu arbeiten, wobei im Hinblick auf die Schichtung des Daches mit Ablage des hinteren Dachteiles oberhalb des vorderen Dachteiles eine Ausbildung des hinteren Antriebsvorgeleges als Viergelenkkinematik und des vorderen Antriebsvorgeleges als Fünfgelenkkinematik als zweckmäßig erwiesen hat.

Weitere Vorteile und zweckmäßige Ausführungen sind den weiteren Ansprüchen, der Figurenbeschreibung und den Zeichnungen zu entnehmen: Es zeigen:
- Fig. 1: in einer schematisierten Darstellung eine Seitenansicht auf ein Hardtop-Fahrzeugdach mit drei starren Dachteilen, dargestellt in Schließposition,
- Fig. 2 bis 5: das Fahrzeugdach gemäß Fig. 1 in diversen Zwischenpositionen bei der Überführung von der Schließ- in die Ablageposition,
- Fig. 6: das Fahrzeugdach gemäß Fig. 1 in Ablageposition,
- Fig. 7 und 8: eine weitere, schematisierte Darstellung von Zwischenpositionen des Fahrzeugdaches, wobei der dem mittleren Dachteil zugeordnete Verstellantrieb für das vordere und das hintere Dachteil gezeigt ist, nicht aber die das mittlere Dachteil mit der Karosserie verbindende Verstellkinematik,
- Fig. 9: in einer stark abstrahierten Darstellung, bezogen auf die Schließposition des Daches, die Verstellkinematiken für vorderes und hinteres Dachteil und den Verstellantrieb für vorderes und hinteres Dachteil mit der zugehörigen Antriebslenkerverbindung, wobei das mittlere Dachteil lediglich bezüglich der ihm zugeordneten Anlenk- und Abstützpunkte symbolisch angedeutet ist,
- Fig. 10 bis 12: in den Fig. 10 und 11 in Seitenansicht bzw. Perspektive, von innen (Fig. 10) bzw. von außen (Fig. 11) gesehen und teilweise aufgeschnitten, eine mögliche konstruktive Ausgestaltung des erfindungsgemäßen Hardtop-Fahrzeugdaches in Schließposition, sowie in Fig. 12 eine vereinfachte Explosionsdarstellung der gesamten Verstellkinematik des Daches, bezogen auf eine Dachseite,
- Fig. 13: entsprechend Fig. 10, eine vergrößerte Darstellung des hinteren Dachteiles im Ausschnitt bei gegenüber dem mittleren Dachteil noch leicht ausgestelltem hinteren Dachteil, wobei in dieser der Schließposition des Daches vorgelagerten Stellung eine durch Verhakungselemente gebildete Spannverbindung zwischen dem hinteren Dachteil und der das mittlere Dachteil an die Karosserie anbindenden Viergelenkkinematik noch offen ist, und
- Fig. 14 und 15: bezogen auf die Schließstellung des Daches und des hinteren Dachteiles die Spannverbindung geöffnet und geschlossen.

In den folgenden Figuren sind gleiche Bauteile mit gleichen Bezugszeichen versehen.

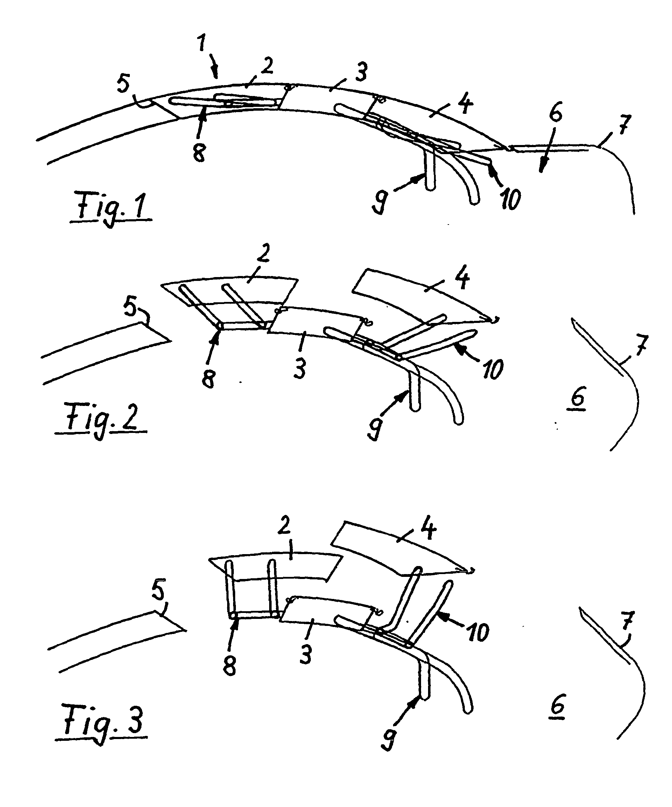

Bei dem in Fig. 1 dargestellten Fahrzeugdach 1 handelt es sich um ein dreiteiliges Hardtop mit einem vorderen Dachteil 2, einem mittleren Dachteil 3 und einem hinteren Dachteil 4, die jeweils in sich starr ausgebildet sind und in der gezeigten Schließposition in einer gemeinsamen Dachebene unmittelbar hintereinander liegend angeordnet sind. In der Schließposition grenzt das vordere Dachteil 2 an einen vorderen Windschutzscheibenrahmen 5. Das hintere Dachteil 4 grenzt an einen Heckdeckel 7, welcher einen Stauraum 6 zur Aufnahme des Fahrzeugdaches 1 in dessen Ablageposition überdeckt, wobei der Stauraum 6 entweder identisch ist mit dem Kofferraum oder einen Teil des Kofferraumes bildet.

Jedem der Dachteile ist eine Verstellkinematik zugeordnet, über die das betreffende Dachteil relativ zur Fahrzeugkarosserie oder relativ zum benachbarten Dachteil zu verstellen ist. Das vordere Dachteil 2 ist über eine Verstellkinematik 8 verstellbar mit dem mittleren Dachteil 3 gekoppelt, welches über eine weitere Verstellkinematik 9 beweglich an die Fahrzeugkarosserie angebunden ist. Das hintere Dachteil 4 ist in analoger Weise wie das vordere Dachteil 2 über eine eigene Verstellkinematik 10 mit dem mittleren Dachteil 3 gekoppelt und gegenüber diesem zu verstellen. Die Verstellkinematiken 8, 9 und 10 der Dachteile 2, 3 und 4 sind in dieser Darstellung jeweils als Viergelenkkinematiken ausgeführt und über Stellantriebe automatisch zu betätigen.

In Fig. 2 ist der Beginn der Öffnungs- bzw. Ablagebewegung des Fahrzeugdaches beim Überführen von der Schließ- in die Ablageposition dargestellt. Der Heckdeckel 7 wird um eine heckseitige Schwenkachse aufgeschwenkt, wodurch ein Durchtritt in den Stauraum 6 hinein zum Hindurchführen des Fahrzeugdaches geöffnet wird. Zu Beginn der Ablagebewegung verbleibt zunächst das mittlere, karosseriefest gekoppelte Dachteil 3 in seiner Ausgangs- bzw. Schließposition und es werden in einer synchronen Bewegung das vordere Dachteil 2 und das hintere Dachteil 4 durch Betätigung ihrer jeweils zugeordneten Verstellkinematik 8 bzw. 10 relativ zum mittleren Dachteil 3 angehoben und in eine Position oberhalb des mittleren Dachteiles 3 versetzt. Das mittlere Dachteil 3 verbleibt während der Anhebe- und Schwenkbewegung der beiden anderen Dachteile zunächst in seiner Ausgangsposition. Auf Grund der Anhebung von vorderem Dachteil 2 und hinterem Dachteil 4 bei unveränderter Position des mittleren Dachteiles 3 wird eine Beeinträchtigung des Fahrzeuginnenraumes bei der Öffnungsbewegung durch Stellkinematiken oder Dachteile vermieden.

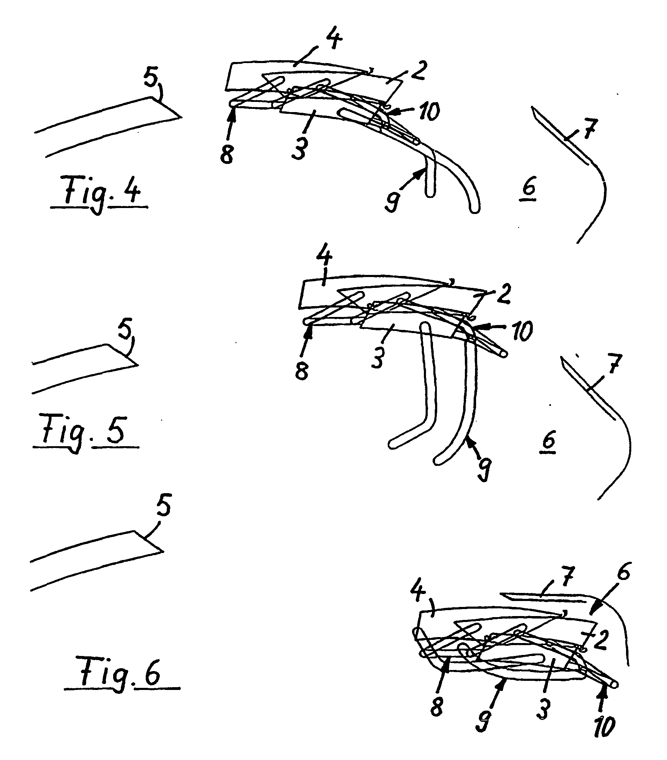

Wie insbesondere Fig. 3 zu entnehmen, wird zum Erreichen eines übereinander gestapelten Dachteilpakets das vordere Dachteil 2 in eine Position unmittelbar oberhalb des mittleren Dachteiles 3 und das hintere Dachteil 4 in eine Position unmittelbar oberhalb des vorderen Dachteiles 2 versetzt, wodurch sich ein gestapeltes Dachteilpaket ergibt, in welchem das mittlere Dachteil 3 zuunterst, das vordere Dachteil 2 zwischenliegend in der Mitte und das hintere Dachteil 4 zuoberst abgelegt sind.

Das Dachteilpaket kann im Rahmen der Erfindung auch in einer Schichtung aufgebaut werden, bei der das hintere Dachteil zwischen dem mittleren Dachteil und dem vorderen Dachteil liegt, wobei dies - was nicht dargestellt ist - mit einer entsprechend angepassten, aber gleichen Grundaufbau aufweisenden Verstellkinematik erreichbar ist.

Dieses Dachteilpaket wird in der Zwischenposition gemäß Fig. 4 erreicht. Innerhalb des Dachteilpakets sind alle drei Dachteile 2, 3 und 4 gleichsinnig mit nach oben weisender Dachaußenseite abgelegt. Diese Ausrichtung wird auch in der Ablagestellung des Fahrzeugdaches im Stauraum 6 beibehalten.

Nach dem Erreichen der Dachteilpaketposition wird, wie Fig. 5 zu entnehmen, die Verstellkinematik 9 des mittleren Dachteiles 3 betätigt und das gesamte Dachteilpaket relativ zur Fahrzeugkarosserie in einer Schwenkbewegung nach hinten in den Stauraum 6 überführt. Nach dem Erreichen der Ablageposition gemäß Fig. 6 kann der Heckdeckel 7 wieder geschlossen werden.

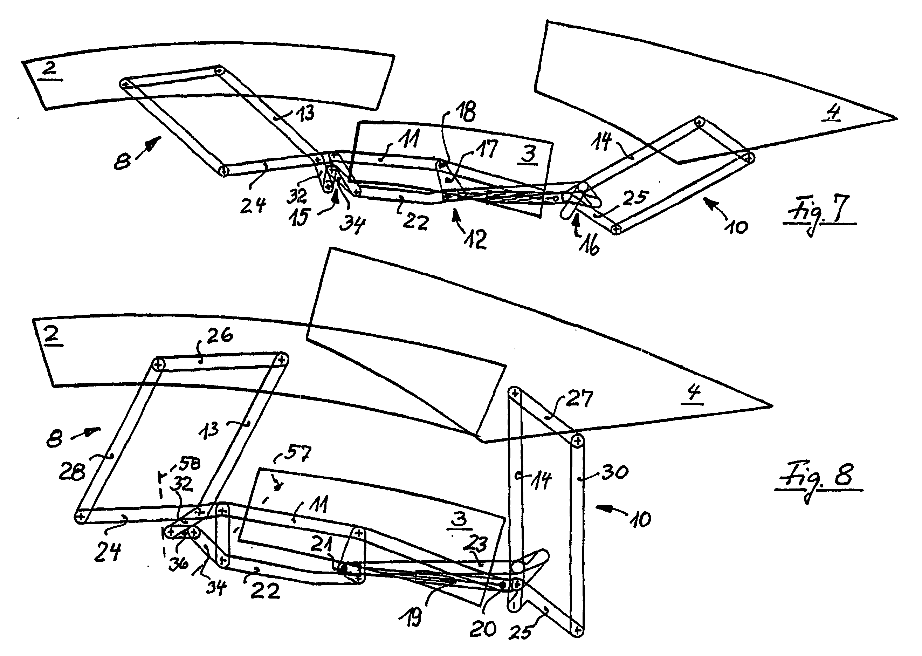

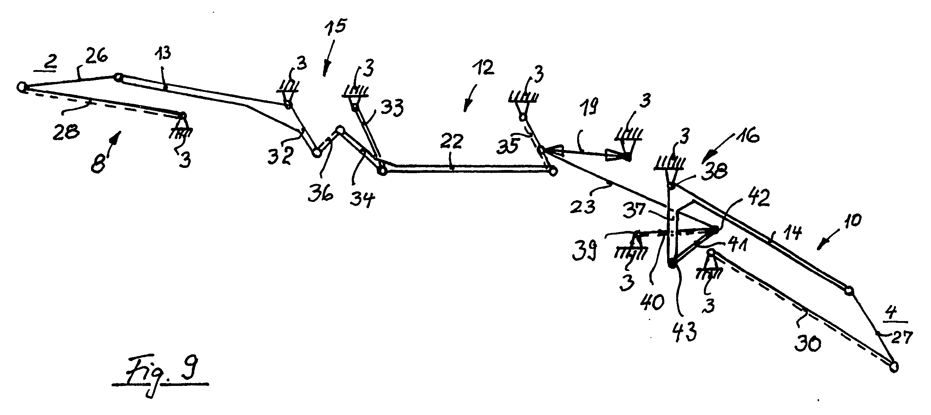

Die Fig. 7 und 8 zeigen ergänzend zu den Fig. 1 bis 6 den Verstellantrieb für die Verstellkinematiken 8 und 10 von vorderem Dachteil 2 und hinterem Dachteil 4. Die Verstellkinematik 9 für den mittleren Dachteil 3 ist nicht dargestellt.

Das mittlere Dachteil 3 ist zeichnerisch um einen Tragbalken 11 ergänzt, der die dem mittleren Dachteil 3 zugeordneten Anlenkpunkte bzw. Gelenke der Verstellkinematiken 8 und 10 sowie eines Verstellantriebs 12 trägt, über den die Verstellung von vorderem Dachteil 2 und hinterem Dachteil 4 gegenüber dem mittleren Dachteil 3 erfolgt.

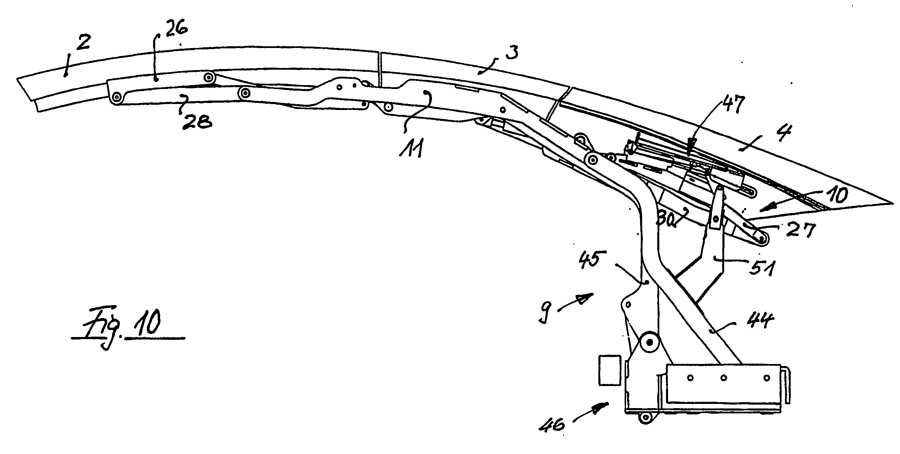

Die Verstellkinematiken 8 und 10 sind als Viergelenkkinematiken ausgebildet, und der Verstellantrieb 12 weist im Übergang zu den Antriebslenkern 13 bzw. 14 der Verstellkinematiken 8 bzw. 10 Antriebsvorgelege 15 bzw. 16 auf, wie sie nachfolgend anhand der Figur 9 noch näher erläutert werden. Im Hinblick auf die im Rahmen der Erfindung bevorzugt vorgesehene, zeitgleich gemeinsame Verstellung von vorderem Dachteil 2 und hinterem Dachteil 4 gegenüber dem mittleren Dachteil 3 weist der Verstellantrieb einen als Schwenkarm ausgebildeten Verstellarm 17 auf, der am Tragbalken 11 bei 18 gelagert ist und dem, als Antriebsquelle für den Verstellantrieb 12, ein Stellzylinder 19 zugeordnet ist, der sich zwischen einer Abstützung 20 am Tragbalken 11 und einer Abstützung 21 gegen den Verstellarm 17 erstreckt und somit im Wesentlichen in Längsrichtung des Fahrzeuges verläuft. Am Verstellarm 17 sind als Antriebslenkerverbindung zu den Verstellkinematiken 8 bzw. 10 von vorderem Dachteil 2 bzw. hinterem Dachteil 4 Stellhebel 22 bzw. 23 angelenkt, die auf die Antriebsvorgelege 15 bzw. 16 auslaufen.

Die Fig. 7 und 8 veranschaulichen, dass die Verstellkinematiken 8 bzw. 10 als Viergelenkkinematiken ausgebildet sind, deren Basis 24 bzw. 25 durch das mittlere Dachteil 3 bzw. den Tragbalken 11 gebildet ist, wobei der Tragbalken 11 im Anlenkbereich der Verstellkinematiken 8 bzw. 10 über das mittlere Dachteil 3 in Fahrzeuglängsrichtung hinausgreift. Die dem jeweiligen Dachteil 2 bzw. 4 zugeordnete Koppel der jeweiligen, als Viergelenkkinematik ausgebildeten Verstellkinematiken 8 bzw. 10 ist mit 26 bzw. 27 bezeichnet, und von den Lenkern 28, 13 bzw. 30, 14 der Verstellkinematiken 8 bzw. 10 bilden bevorzugt die zum mittleren Dachteil 3 benachbart liegenden Lenker 13 bzw. 14 die Antriebslenker.

Fig. 9 veranschaulicht, dass von den Antriebsvorgelegen 15 bzw. 16 das Antriebsvorgelege 15, das im Übergang auf das vordere Dachteil 2 vorgesehen ist, als Fünflenkergetriebe ausgebildet ist, während das Antriebsvorgelege 16, das im Übergang auf das hintere Dachteil 4 liegt, als überkreuztes Vierlenkergetriebe gestaltet ist. Die Anbindung der einzelnen Gelenkpunkte an das mittlere Dachteil 3 ist für die Verstellkinematiken 8 und 10 sowie auch für den Verstellantrieb 12 symbolisch jeweils als Festlagerstelle zum Dach 3 dargestellt, wobei insbesondere der Vergleich zu Fig. 7 und 8 die Lage der einzelnen Gelenkpunkte erkennen lässt, insbesondere auch durch die Verwendung gleicher Bezugszeichen wie in den Fig. 7 und 8. Zur Erleichterung des Überblicks sind zudem in der Fig. 9 für die verschiedenen Lenker teilweise unterschiedliche Darstellungen (Doppellinie in Volllinien, Doppellinie mit Strichlinie, usw.) gewählt.

Das Antriebsvorgelege 15 im Übergang zwischen Dachteil 3 und Dachteil 2, das als Fünflenkergetriebe ausgebildet ist, umfasst von der Anbindung an das Dachteil 3 als Basis ausgehende Lenker 32 und 33, von denen der Lenker 32 durch einen Arm des Antriebslenkers 13 der Verstellkinematik 8 gebildet ist, so dass der Antriebslenker 13 sich insgesamt als Winkelhebel darstellt. Ebenso stellt sich der Stellhebel 22 als Winkelhebel dar, wobei der abgewinkelte Bereich einen Lenker 34 bildet und der Stellhebel 22 über den Lenker 33 und einen Lenker 35 parallelogrammartig am mittleren Dachteil 3 angelenkt und etwa parallel zum Dachteil 3 in Fahrzeuglängsrichtung verlagerbar schwenkgeführt ist. Der Lenker 33 bildet einen Führungslenker der als Antriebsvorgelege 15 vorgesehenen Fünfgelenkkinematik.

Verbunden sind die dem Antriebslenker 13 bzw. dem in Fahrzeuglängsrichtung sich erstreckenden, längs des Dachteiles 3 verlaufenden und verlagerbaren Stellhebel 22 lagefest zugeordneten Lenker 32 bzw. 34 über einen Zwischenlenker 36. Dieser Zwischenlenker 36 schwenkt beim Verstellen des Dachteiles 2 gegenüber dem Lenker 32 und nimmt in den Endlagen des Daches 2 in grober Annäherung Lagen 57 bzw. 58 - symbolisiert in Fig. 8 jeweils durch eine Strichlinie - ein, in deren der Schließlage des Daches entsprechender Lage 57 der Zwischenlenker 36 vom Lenker 34 nach unten ragt (Fig. 7 und 9) und in deren der Paketstellung des Daches 2 entsprechender Lage 58 der Zwischenlenker 36 vom Lenker 34 ausgehend sich nach oben erstreckt, wobei der Zwischenlenker 36, bezogen auf seine Erstreckungsrichtung, im Ausführungsbeispiel einen sich nach der vom Dachteil 3 abgewandten Seite öffnenden Schwenkbereich um seine Anlenkung am Lenker 32 durchläuft, der deutlich über 180° groß ist. Im Ausführungsbeispiel liegt dieser Schwenkbereich in der Größenordnung von 270°, wobei die Größe des vom Zwischenlenker 36 in den Endlagen gegenüber dem Lenker 32 eingeschlossenen Winkels in den beiden Endlagen etwa gleiche Größe aufweist und im Bereich von 90° liegt, bei einem Schwenkweg des Lenkers 32 um seinen dachseitigen Anlenkpunkt von etwa 180°.

Gegenüberliegend erfolgt die Antriebsverbindung zur Verstellkinematik 10 des hinteren Dachteiles 4 über das Antriebsvorgelege 16, das als Vierlenkergetriebe ausgebildet ist, dessen einer Lenker 37 durch einen - im Ausführungsbeispiel etwa um 45° - abgewinkelten Arm des Antriebslenkers 14 der Verstellkinematik 10 gebildet ist, so dass auch bezüglich der Verstellkinematik 10 der Antriebslenker 14 ein Winkelhebel ist. Die Basis des als Viergelenkgetriebe ausgebildeten Antriebsvorgeleges 16 ist durch den Anlenkpunkt 38 des Antriebslenkers 14 zum Dachteil 3 und einen Anlenkpunkt 39 für einen Lenker 40 zum Dachteil 3 bestimmt, der sich in der darstellten Schließlage des Daches im Wesentlichen senkrecht zum Lenker 37 erstreckt und der diesen überkreuzt, wobei das dem Anlenkpunkt 39 gegenüberliegende Ende des Lenkers 40 über einen Lenker 41 als Koppel mit dem freien Ende des Lenkers 37 verbunden ist. Die entsprechenden Anlenkpunkte sind mit 42 und 43 bezeichnet und im Anlenkpunkt 42 zwischen dem die Koppel bildenden Lenker 41 zum Lenker 40 greift der Stellhebel 23 an, der wie der Stellhebel 22 mit dem Lenker 35 verbunden ist, der über den symbolisch dargestellten Stellzylinder 19 beaufschlagt ist.

Die geschilderte Ausbildung der Antriebsvorgelege 15, 16 führt zu einer im Wesentlichen synchronen Verstellbewegung der Dachteile 2 und 4 gegenüber dem Dachteil 3, wobei in den Endphasen der Verstellung die Verstellgeschwindigkeit durch die kinematische Auslegung gegenüber der Verstellgeschwindigkeit im mittleren Verstellbereich deutlich verringert ist.

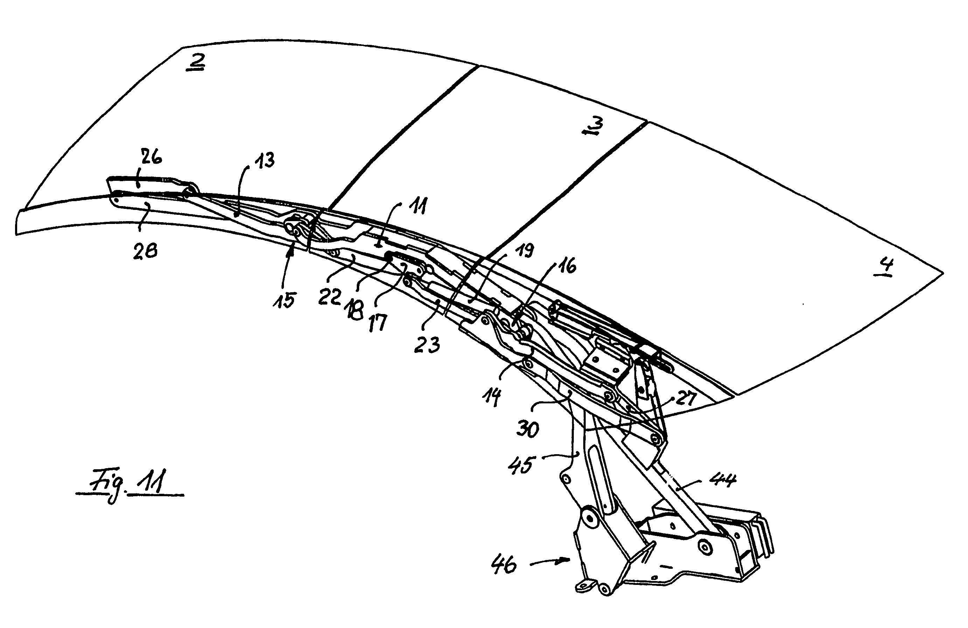

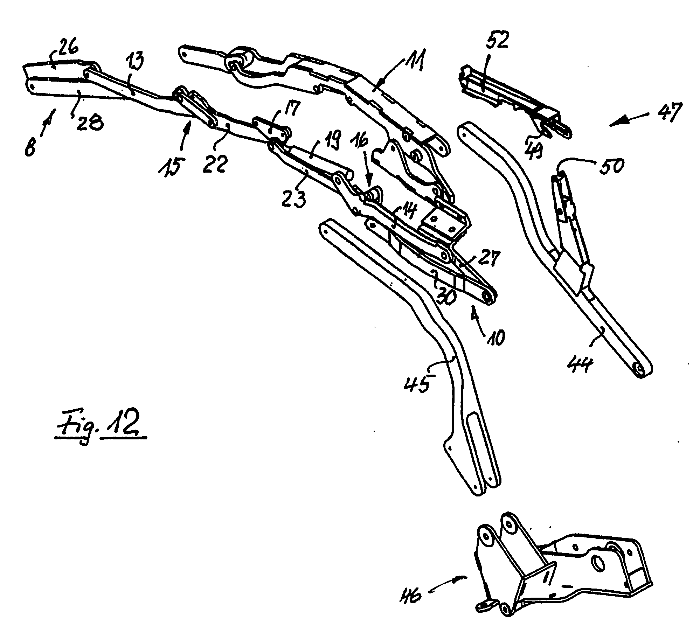

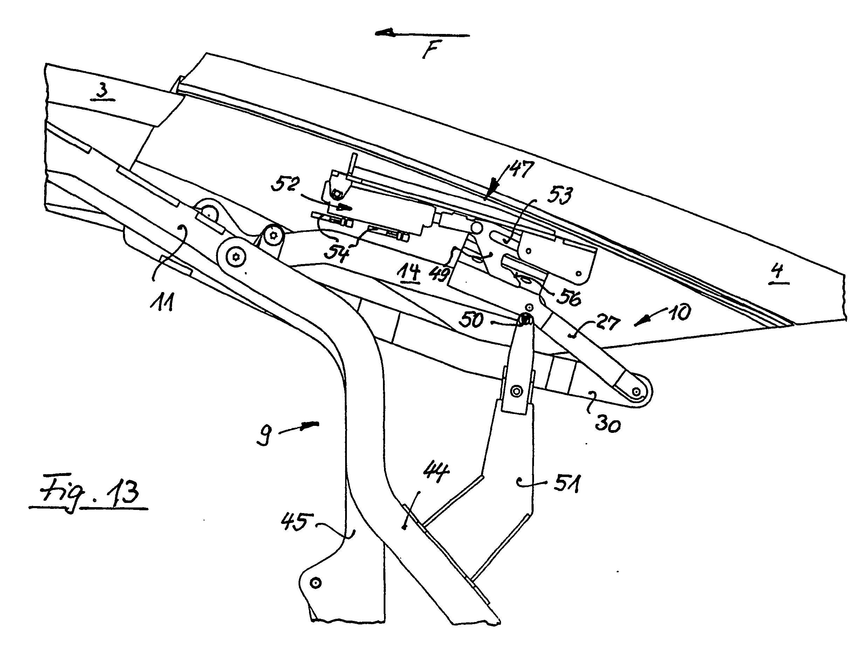

Fig. 10 bis 12 zeigen eine bauliche Ausführungsform der vorstehend geschilderten Verstell- und Antriebskinematiken, wobei ergänzend zur Verstellkinematik 9 für das mittlere Dachteil 3 deren C-Säulenlenker 44 und deren Hauptlenker 45 in der Anbindung gegen eine karosserieseitige Konsole 46 gezeigt sind. Der Konsole 46 ist, was nicht weiter gezeigt ist, der Antrieb für die Verstellkinematik 9 zugeordnet. Weiter ist in dieser Gesamtanordnung eine Spannverbindung 47 zwischen dem hinteren Dachteil 4 und dem C-Säulenlenker 44 veranschaulicht, die, wie nachfolgend anhand der Figuren 13 bis 15 noch näher gezeigt, ein dem hinteren Dachteil 4 zugeordnetes, verstellbares Verhakungselement 49 und ein weiteres Verhakungselement 50 umfasst, das über eine Stütze 51 am C-Säulenlenker 44 angeordnet ist, wobei die beiden Verhakungselemente 49 und 50 bei geschlossenem hinteren Dachteil 4 in einer Eingriffslage zueinander stehen und über einen dem dachseitigen Verhakungselement 49 zugeordneten Stellantrieb 52 gegeneinander verriegelbar sind, so dass ungeachtet dessen, dass das Fahrzeugdach 1 insgesamt über das mittlere Dachteil 3 mit der Karosserie des Fahrzeuges verbunden ist, das hintere Dachteil 4 zusätzlich gegen die Karosserie verspannt werden kann, womit die Verstellkinematik 10, über die das hintere Dachteil 4 mit dem mittleren Dachteil 3 verbunden ist, entlastet und das Dach 1 insgesamt verspannt werden kann.

In Fig. 13 ist bei leicht gegenüber dem mittleren Dachteil 3 angehobenem Dachteil 4 - das Dachteil 3 befindet sich in seiner der Schließposition des Daches 1 entsprechenden Stellung - die das mittlere Dachteil 3 tragende Verstellkinematik 9 mit dem C-Säulenlenker 44 und dem Hauptlenker 45 teilweise dargestellt, und es ist auch die Verstellkinematik 10, über die das hintere Dachteil 4 am mittleren Dachteil 3 angelenkt ist, mit der Koppel 27 und dem Lenker 30 sowie dem Antriebslenker 14 erkennbar. Der Lenker 30 ist, was in diesem Ausschnitt nicht erkennbar ist, an seinem bezogen auf die Fahrtrichtung F vorderen, dem mittleren Dachteil zugewandten Ende am Tragbalken 11 angelenkt und somit bezüglich seines Anlenkpunktes zum mittleren Dachteil 3 lagefest. Am Koppellenker 27 ist das dachseitige Verhakungselement 49 der Spannverbindung 47 über den Stellantrieb 52 in Fahrzeuglängsrichtung verschiebbar befestigt, wobei eine Kulissenführung 53 als Schiebeführung vorgesehen ist und der dem hinteren Dachteil 4 zugehörige Teil der Spannverbindung 47 mit dem Stellantrieb 52 und dem Verhakungselement 48 sowie der zugehörigen Kulissenführung 53 insgesamt um eine in Verschieberichtung verlaufende Achse schwenkbar zum Dachteil 4 angelenkt sein kann, was hier nicht gezeigt ist. Der Stellantrieb 52 ist als Linearantrieb mit Versorgungsanschlüssen 54 für einen Stellzylinder angedeutet.

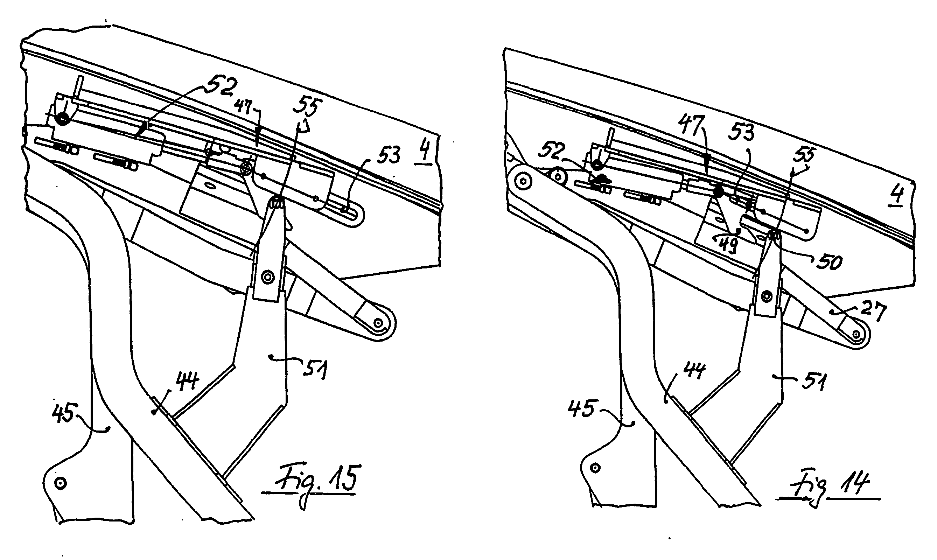

Das Gegenstück zum dachteilseitigen Verhakungselement 49 ist durch das Verhakungselement 50 in Form eines Bolzens gebildet, der zur Stütze 51 lagefest ist und der benachbart zur Einlaufbahn 55 (s. Fig. 14 und 15) des dachteilseitigen Verhakungselementes 49 beim Einlaufen des hinteren Dachteiles 4 in seine zum mittleren Dachteil 3 bündig liegende Schließstellung liegt, so dass über den Stellantrieb 52 insbesondere in Verbindung mit einer Einlaufschräge 56 am Verhakungselement 49 durch Längsverschieben des Verhakungselementes 49 eine Verrastung erreichbar ist, die auch zur Verspannung des Gesamtdaches und dessen lagefester Abstützung gegenüber der Karosserie, und damit zu einem insgesamt steiferen Verbund beiträgt, wobei durch den Anschluss der Spannverbindung 47 an den C-Säulenlenker 44 im Bereich der Konsole 46 auch ein sehr steifer Verbund bei geringen Belastungen erreicht wird.

Fig. 14 und 15 beziehen sich auf die bündige Schließlage des hinteren Dachteiles 4 zum mittleren Dachteil 3, und es zeigt Fig. 14 die Ausgangslage der Spannverbindung 47 zur Herstellung der Verrastung über die Verhakungselemente 49 und 50, während Fig. 15 die Spannverbindung 47 im verhakten Zustand zeigt.

## Patentansprüche

1. Hardtop-Fahrzeugdach (1) mit drei starren Dachteilen (2-4), die zwischen einer den Fahrzeuginnenraum überdeckenden Schließposition und einer den Fahrzeuginnenraum freigebenden Ablageposition verstellbar und in Schließposition in Fahrzeuglängsrichtung hintereinander liegend angeordnet sind, jeweils mit einer als Viergelenkkinematik ausgebildeten, einen Antriebslenker (13; 14; 44, 45) aufweisenden Verstellkinematik (8 bis 10) zur Einstellung der Dachposition versehen und miteinander verbunden sind, sowie gemeinsam über die Verstellkinematik (9) eines Dachteiles (3) gegen die Fahrzeugkarosserie abgestützt sind, wobei die Dachteile (2- 4) in Ablageposition übereinander liegen und ein Dachteilpaket bilden,
**dadurch gekennzeichnet,**
**dass** in Ablageposition im Dachteilpaket bei gleichsinniger Stapelung der Dachteile (2-4) mit nach oben weisender Dachaußenseite das mittlere Dachteil (3) zuunterst abgelegt ist und die beiden weiteren Dachteile (2; 4) über dem mittleren Dachteil (3) liegen, dass als das die Dachteile (2-4) gemeinsam gegen die Karosserie abstützendes Dachteil das mittlere Dachteil (3) vorgesehen ist und dass der Verstellantrieb (12) zur Verstellung des vorderen Dachteiles (2) und des hinteren Dachteiles (4) gegenüber dem mittleren Dachteil (3) am mittleren Dachteil (3) vorgesehen ist und im Anschluss an die Verstellkinematiken (8; 10) von vorderem Dachteil (2) und hinterem Dachteil (4) Antriebsvorgelege (15, 16) umfasst, von denen das eine Antriebsvorgelege (16) durch ein Vierlenkergetriebe gebildet ist, dessen Basis zum mittleren Dachteil (3) lagefest ist und dessen Basis und Koppel verbindende Lenker (37; 40) einander in Schließposition der Dachteile (2- 4) überkreuzen, wobei der eine Lenker (37) der überkreuzenden Lenker (37; 40) zum Antriebslenker (14) der das zugehörige Dachteil (4) tragenden Viergelenkkinematik (4) lagefest ist.

2. Hardtop-Fahrzeugdach nach Anspruch 1,
**dadurch gekennzeichnet,**
**dass** eines der Antriebsvorgelege (15) als Fünflenkergetriebe ausgebildet ist, dessen Basis zum mittleren Dachteil (3) lagefest ist und von dessen Lenkern (32; 33; 34; 36) einer einen zum Antriebslenker (13) der das zugehörige Dachteil (2) tragenden Viergelenkkinematik (8) lagefesten Lenker (32) und einer einen zu einem Stellhebel (22) des das vordere Dachteil (2) und das hintere Dachteil (4) verbindenden Verstellantriebes (12) lagefesten Lenker (34) bildet, wobei der zu dem einen Stellhebel (22) des Verstellantriebes (12) lagefeste Lenker (34) des Fünflenkergetriebes über einen an dessen Basis angelenkten Lenker (33) geführt ist.

3. Hardtop-Fahrzeugdach nach Anspruch 1 oder 2,
**dadurch gekennzeichnet,**
**dass** der Verstellantrieb (12) für das vordere Dachteil (11) und das hintere Dachteil (4) eine gemeinsame Antriebsquelle (19) aufweist.

4. Hardtop-Fahrzeugdach nach Anspruch 3,
**dadurch gekennzeichet**,
dass die Antriebsquelle durch eine Linearantrieb, insbesondere einen Stellzylinder (19) gebildet ist.

5. Hardtop-Fahrzeugdach nach Anspruch 3 oder 4,
**dadurch gekennzeichnet,**
**dass** der Verstellantrieb (12) einen am mittleren Dachteil (3) angelenkten Verstellarm (17) aufweist, von dem Stellhebelverbindungen zu den das vordere Dachteil (2) und das hintere Dachteil (4) tragenden Verstellkinematiken (8; 10) vorgesehen sind.

6. Hardtop-Fahrzeugdach nach Anspruch 2,
**dadurch gekennzeichnet,**
**dass** das im Übergang auf das vordere Dachteil (2) liegende Antriebsvorgelege (15) als Fünflenkergetriebe ausgebildet ist.

7. Hardtop-Fahrzeugdach nach Anspruch 1,
**dadurch gekennzeichnet,**
**dass** das im Übergang auf das vordere Dachteil (4) liegende Antriebsvorgelege als Vierlenkergetriebe ausgebildet ist.

8. Hardtop-Fahrzeugdach nach einem der vorhergehenden Ansprüche,
**dadurch gekennzeichnet,**
**dass** in Ablageposition im Dachteilpaket das mittlere Dachteil (3) zuunterst, das vordere Dachteil (2) in der Mitte und das hintere Dachteil (4) zuoberst abgelegt ist.

9. Hardtop-Fahrzeugdach nach einem der Ansprüche 1 bis 7,
**dadurch gekennzeichnet,**
**dass** in Ablageposition im Dachteilpaket das mittlere Dachteil (3) zuunterst, das vordere Dachteil (2) zuoberst und das hintere Dachteil (4) in der Mitte abgelegt ist.

10. Hardtop-Fahrzeugdach nach einem der vorhergehenden Ansprüche,
**dadurch gekennzeichnet,**
**dass** bei Überführung der Dachteile (2- 4) zwischen ihrer Schließ- und Ablageposition das vordere Dachteil (2) und das hintere Dachteil (4) gleichzeitig, insbesondere in einer synchronen, zeitgleichen Bewegung, verstellbar sind.

## Claims

1. Hard top vehicle roof (1) with three rigid roof pieces (2-4) which can be displaced between a closed position covering the vehicle interior and a put-away position opening up the vehicle interior and, in the closed position, are situated one behind another in the longitudinal direction of the vehicle and are in each case provided with a displacing kinematic mechanism (8 to 10), which is designed as a four-joint kinematic mechanism and has a driving link (13; 14; 44, 45) and is intended for adjusting the roof position, and are connected to one another, and also are jointly supported against the vehicle body via the displacing kinematic mechanism (9) of a roof piece (3), the roof pieces (2-4) being situated one above another in the put-away position and forming a package of roof pieces, **characterized in that**, in the put-away position, in the package of roof pieces with the roof pieces (2-4) being stacked in the same direction with the outside of the roof facing upwards, the central roof piece (3) is put away lowermost and the two further roof pieces (2; 4) lie above the central roof piece (3), **in that** the central roof piece (3) is provided as the roof piece jointly supporting the roof pieces (2-4) against the body, and **in that** the displacing drive (12) for displacing the front roof piece (2) and the rear roof piece (4) relative to the central roof piece (3) is provided on the central roof piece (3), and, following the displacing kinematic mechanisms (8; 10) of front roof piece (2) and rear roof piece (4), comprises driving countershaft assemblies (15, 16), of which the one driving countershaft assembly (16) is formed by a four-bar mechanism, the base of which is fixed in position with respect to the central roof piece (3) and the links (37; 40) of which, which connect the base and couplers, cross over one another in the closed position of the roof pieces (2-4), the one link (37) of the over-crossing links (37; 40) being fixed in position with respect to the driving link (14) of the four-bar kinematic mechanism (4) supporting the associated roof piece (4).

2. Hard top vehicle roof according to Claim 1, **characterized in that** one of the driving countershaft assemblies (15) is designed as a five-bar mechanism, the base of which is fixed in position with respect to the central roof piece (3), and of its links (32; 33; 34; 36), one forms a link (32) which is fixed in position with respect to the driving link (13) of the four-joint kinematic mechanism (8) supporting the associated roof piece (2) and one forms a link (34) which is fixed in position with respect to an adjusting lever (22) of the displacing drive (12) connecting the front roof piece (2) and the rear roof piece (4), with that link (34) of the five-bar mechanism which is fixed in position with respect to the one adjusting lever (22) of the displacing drive (12) being guided via a link (33) coupled to its base.

3. Hard top vehicle roof according to Claim 1 or 2, **characterized in that** the displacing drive (12) for the front roof piece (11) and the rear roof piece (4) has a common driving source (19).

4. Hard top vehicle roof according to Claim 3, **characterized in that** the driving source is formed by a linear drive, in particular an adjusting cylinder (19).

5. Hard top vehicle roof according to Claim 3 or 4, **characterized in that** the displacing drive (12) has a displacing arm (17) which is coupled to the central roof piece (3) and from which adjusting lever connections to the displacing kinematic mechanisms (8; 10) supporting the front roof piece (2) and the rear roof piece (4) are provided.

6. Hard top vehicle roof according to Claim 2, **characterized in that** the driving countershaft assembly (15) situated in the transition to the front roof piece (2) is designed as a five-bar mechanism.

7. Hard top vehicle roof according to Claim 1, **characterized in that** the driving countershaft assembly situated in the transition to the front roof piece (4) is designed as a four-bar mechanism.

8. Hard top vehicle roof according to one of the preceding claims, **characterized in that**, in the put-away position, in the package of roof pieces, the central roof piece (3) is put away lowermost, the front roof piece (2) is put away in the centre and the rear roof piece (4) is put away uppermost.

9. Hard top vehicle roof according to one of Claims 1 to 7, **characterized in that**, in the put-away position, in the package of roof pieces, the central roof piece (3) is put away lowermost, the front roof piece (2) is put away uppermost and the rear roof piece (4) is put away in the centre.

10. Hard top vehicle roof according to one of the preceding claims, **characterized in that**, during the transfer of the roof pieces (2-4) between their closed position and put-away position, the front roof piece (2) and the rear roof piece (4) can be displaced simultaneously, in particular in a synchronous, isochronous movement.

## Revendications

1. Toit amovible de véhicule (1) comprenant trois parties de toit rigides (2 - 4), qui peuvent être déplacées entre une position de fermeture recouvrant l'habitacle du véhicule et une position de rangement libérant l'habitacle du véhicule et qui sont disposées à plat l'une derrière l'autre dans la direction longitudinale du véhicule dans la position de fermeture, qui sont pourvues à chaque fois d'une cinématique de déplacement (8 à 10) réalisée sous forme de cinématique à quadrilatère articulé présentant un bras d'entraînement (13 ; 14 ; 44, 45) pour l'ajustement de la position du toit et qui sont connectées les unes aux autres, et qui sont supportées en commun par le biais de la cinématique de déplacement (9) d'une partie de toit (3) contre la carrosserie du véhicule, les parties de toit (2 à 4) étant l'une au-dessus de l'autre dans la position de rangement et formant un paquet de parties de toit,
**caractérisé en ce que**
dans la position de rangement dans le paquet de parties de toit, pour un empilement dans le même sens des parties de toit (2 - 4) avec un côté extérieur de toit tourné vers le haut, la partie de toit centrale (3) est rangée le plus en dessous et les deux autres parties de toit (2 ; 4) sont placées par-dessus la partie de toit centrale (3), **en ce que** l'on prévoit en tant que partie de toit supportant les parties de toit (2 - 4) conjointement contre la carrosserie, la partie de toit centrale (3) et **en ce que** l'entraînement de déplacement (12) est prévu sur la partie de toit centrale (3) pour le déplacement de la partie de toit avant (2) et de la partie de toit arrière (4) par rapport à la partie de toit centrale (3), et comprend, raccordées aux cinématiques de déplacement (8 ; 10) de la partie de toit avant (2) et de la partie de toit arrière (4) des transmissions intermédiaires d'entraînement (15, 16), dont une transmission intermédiaire d'entraînement (16) est formée par un quadrilatère articulé dont la base est fixée à la partie de toit centrale (3) et dont les bras (37 ; 40) reliant la basé et la bielle se croisent dans la position de fermeture des parties de toit (2 - 4), l'un des bras (37) des bras se croisant (37 ; 40) étant fixé par rapport au bras d'entraînement (14) de la cinématique à quadrilatère articulé (4) portant la partie de toit (4) associée.

2. Toit amovible de véhicule selon la revendication 1,
**caractérisé en ce que**
l'une des transmissions intermédiaires d'entraînement (15) est réalisée sous forme de transmission à cinq bras articulés, dont la base est fixée par rapport à la partie de toit centrale (3) et parmi les bras (32 ; 33 ; 34 ; 36) de laquelle un forme un bras fixe (32) par rapport au bras d'entraînement (13) de la cinématique à quadrilatère articulé (8) portant la partie de toit associée (2) et un forme un bras fixe (34) par rapport à un levier de commande (22) de l'entraînement de déplacement (12) reliant la partie de toit avant (2) à la partie de toit arrière (4), le bras (34) de la transmission à cinq bras articulés fixe par rapport à un levier de commande (22) de l'entraînement de déplacement (12) étant guidé par le biais d'un bras (33) articulé à sa base.

3. Toit amovible de véhicule selon la revendication 1 ou 2,
**caractérisé en ce que**
l'entraînement de déplacement (12) pour la partie de toit avant (11) et la partie de toit arrière (4) présente une source d'entraînement commune (19).

4. Toit amovible de véhicule selon la revendication 3,
**caractérisé en ce que**
la source d'entraînement est formée par un entraînement linéaire, notamment un cylindre d'actionnement (19).

5. Toit amovible de véhicule selon la revendication 3 ou 4,
**caractérisé en ce que**
l'entraînement de déplacement (12) présente un bras de déplacement (17) articulé à la partie de toit centrale (3), depuis lequel des connexions de levier de commande aux cinématiques de déplacement (8 ; 10) portant la partie de toit avant (2) et la partie de toit arrière (4) sont prévues.

6. Toit amovible de véhicule selon la revendication 2,
**caractérisé en ce que**
la transmission intermédiaire d'entraînement (15) placée dans la transition à la partie de toit avant (2) est réalisée sous forme de transmission à cinq bras articulés.

7. Toit amovible de véhicule selon la revendication 1,
**caractérisé en ce que**
la transmission intermédiaire d'entraînement placée dans la transition à la partie de toit arrière (4) est réalisée sous forme de transmission à quadrilatère articulé.

8. Toit amovible de véhicule selon l'une quelconque des revendications précédentes,
**caractérisé en ce que**
dans la position de rangement dans le paquet de parties de toit, la partie de toit centrale (3) est rangée le plus en dessous, la partie de toit avant (2) au milieu et la partie de toit arrière (4) le plus au-dessus.

9. Toit amovible de véhicule selon l'une quelconque des revendications 1 à 7,
**caractérisé en ce que**
dans la position de rangement dans le paquet de parties de toit, la partie de toit centrale (3) est rangée le plus en dessous, la partie de toit avant (2) le plus áu-dessus et la partie de toit arrière (4) au milieu.

10. Toit amovible de véhicule selon l'une quelconque des revendications précédentes,
**caractérisé en ce que**
lors du transfert des parties de toit (2 - 4) entre leur position de fermeture et leur position de rangement, la partie de toit avant (2) et la partie de toit arrière (4) peuvent être déplacées simultanément, notamment dans un mouvement synchronisé simultané.
